# EUROPEAN PATENT SPECIFICATION

(11) **EP 0 692 182 B1**
(45) Date of publication and mention of the grant of the patent: **18.10.2000**
(21) Application number: 95201901.6
(22) Date of filing: 11.07.1995
(51) Int. Cl.: A01D 67/02, A01D 41/12, A01D 46/00

(54) **Access means for agricultural harvester**
Zugangsvorrichtung für landwirtschaftliche Erntemaschine
Dispositif d'accès pour moissonneuse agricole

(30) Priority: 15.07.1994 GB 9414295
(43) Date of publication of application: 17.01.1996
(73) Proprietor: New Holland Braud S.A., 85220 Coex (FR)
(72) Inventor: Martin, Jean-Paul M.L., F-85800 Le Fenouiller (FR); Druais, Robert E.J-M., F-85000 La Roche sur Yon (FR); Barbeau, Bruno M.M., F-85220 Coex (FR)
(74) Representative: Vandenbroucke, Alberic

(56) References cited:
- DD-A- 284 198
- DE-A- 2 111 140
- GB-A- 2 053 811
- US-A- 3 232 376

## Description

The present invention relates generally to access means for the elevated operator's station of a vehicle, and more particularly to such means employing a ladder in combination with a platform or catwalk.

In the following description right hand and left hand references are determined by standing at the rear of the vehicle facing in a direction of forward travel. Also, in the following description, it is to be understood that terms such as "forward", "rearward", "upward", etc., are words of convenience and are not to be construed as limiting terms.

The size and configuration of certain self-propelled agricultural vehicles, such as grape harvesters for example, has dictated the use of an operator's station or platform which is positioned at a substantially elevated location above the ground so as to give the operator a good view of some of the crop treating processes carried out by the machine. The operator's station of a grape harvester conventionally is located above one of the front steering wheels and due to the elevated location, an access ladder is normally needed to enable the operator to climb to and from the platform, the ladder extending downwardly therefrom to a location convenient to the ground.

An access ladder of the above type, though convenient, presents a number of problems to the effective operation of the vehicle. In most instances, because of the location of the platform relative to the front steering wheels, the ladder protrudes beyond the outer edge of a wheel, thus increasing the overall width of the machine and hindering transport. Furthermore, a depending ladder creates an obstacle during field operations which may be engaged by standing crops and either may be damaged itself by the impact or cause damage to the standing crop. Moreover, any protrusion beyond the width of the wheels increases the possibility of adverse contact with buildings, gates, other vehicles and similar obstacles commonly found in the area in which the harvester operates.

Such a ladder further has the disadvantage that it serves only to reach the operator's platform and cannot be used to gain access to an eventual servicing platform normally located behind the operator's platform at a still further elevated position. Servicing platforms commonly are provided to allow the operator to perform regular maintenance or servicing operations, such as greasing, to machine components or to enable visual inspection and repair of machine parts in case of a breakdown. In many cases, an operator gets to the elevated servicing platform in a rather inconvenient manner by climbing over his seat or by using a passageway, such as a catwalk, purpose-made to get around the operator's station. However, on nowadays agricultural harvesters, the implementation of environmentally isolated cabs, enclosing the operator's station, is widely spread, further impeding an easy access to the servicing platform.

To attenuate some of the above problems related to the likelihood of impact with obstacles, access ladders for agricultural self-propelled vehicles commonly are pivotable between an operative position extending downwardly from the operator's platform either to a position extending horizontally across the access side of the platform or to a raised, upwardly directed position. These solutions however do not improve the accessibility of an elevated servicing platform. Moreover, access ladders which are simple of construction normally require a considerable effort from the operator to get the ladder to a raised position while more complicated structures have the disadvantage of increased component count, entailing extra assembly operations and hence increasing manufacturing costs.

US-A-3,232,376 discloses a moveable access ladder for combines which can be pivoted about a vertical axis between an operative position next to the front wheel and an inoperative position over and forward of the wheel. In the inoperative position the ladder is stored beneath a fixed operator's steering platform. The operator can pivot the ladder by means of a lever next to the seat. This arrangement provides no direct access means between the operator's platform and the rear of the vehicle; the operator has to climb over graintank or, otherwise, has to descend and to climb another ladder at the rear of the combine.

A similar type of access means is shown in GB-A-2,053,811. Herein the access means comprises a boarding ramp with a set of steps, which equally can be pivoted between an operative position next to the front wheel and an inoperative position forward of this wheel. In the operative position the upper step constitutes a small additional platform, facilitating access to the cab. Also here no means are provided giving access to the rear of the vehicle.

It therefore is the objective of the present invention to overcome the drawbacks of the above arrangements by providing access means for reaching an operator's station which are simple in construction but nonetheless convenient to handle and moreover improve the accessibility of other machine components.

According to a first aspect of the invention a vehicle is provided comprising :
- a chassis supported by a plurality of ground engaging wheels for movement across a field;
- an elevated operator's station positioned on the chassis; and
- access means for gaining access to the operator's station;

said access means being moveable between an operative, access gaining position and an inoperative, transport position; and
said access means comprising ladder means and platform means operatively associated with each other in a manner such that said ladder means and said platform means move in unison when moving the access means from the inoperative position to the operative position and vice versa.

The vehicle is characterized in that said ladder means is connected to said platform means by an articulated connection permitting movement of said ladder means relative to said platform means when moving said access means from said inoperative position to said operative position and vice versa.

A handle mechanism may be provided which comprises a lost motion mechanism enabling to unlock the access means from its inoperative position before starting to move said access means towards the operative position. The handle mechanism can be operated from a location either on the ground or on the operator's station.

According to a second aspect of the invention a method is provided for controlling the position of access means for an elevated operator's station of a vehicle; said access means being moveable between an inoperative and an operative position said access means comprising platform means, ladder means articulatedly connected to said platform means and handle means operatively associated with said access means, and said method comprising the steps of:
- actuating said handle means in one direction for simultaneously moving the platform means and the ladder means towards an operative position; and
- actuating said handle means in the opposite direction for simultaneously moving the platform means and the ladder means towards an inoperative position.

According to a third aspect of the invention a method is provided for gaining access to an elevated operator's station of a vehicle having access means including ladder means and platform means, moveable between inoperative and operative positions.

The method is characterized in that it comprises the steps of : - manually actuating handle means in one direction from a position on the ground to move the ladder means and the platform means towards the operative position;
- mounting the ladder means;
- using the platform means as an intermediate support;
- stepping on the operator's platform; and
- actuating the handle means in the opposite direction from the position on the operator's station to move the ladder means and the platform means towards the inoperative position.

A vehicle in accordance with the present invention will now be described in greater detail, by way of example, with reference to the accompanying drawings, in which :
Figure 1 is a diagrammatic side view of a grape harvester in which the present invention is embodied;
Figure 2 is a perspective view of the access means in relation to the operator's station whereby the cab has been curtailed and with the access means being placed in the inoperative position;
Figure 3 is a view similar to Figure 2 but showing the access means in the operative position;
Figure 4 is a detailed front view of a control mechanism partially shown in Figures 2 and 3;
Figure 5 is a cross sectional view taken along lines V-V in Figure 4;
Figure 6 is a cross sectional view taken along lines VI-VI in Figure 4;
Figure 7 is a partial view of Figure 4 with the control mechanism in another position;
Figure 8 is a view similar to Figure 7 but with the control mechanism in a still further position;
Figure 9 is a detailed perspective view of a portion of the access means; and
Figure 10 is a detailed view of a portion of the control mechanism.

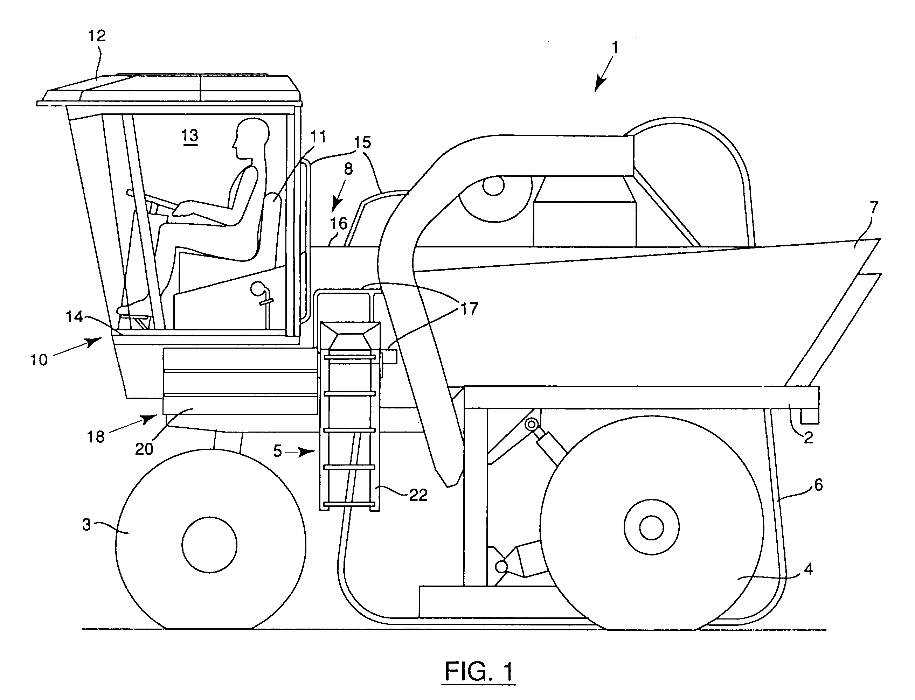

The harvesting machine shown in Figure 1 is a grape harvester, generally indicated by 1, and comprises, in a conventional manner, a chassis 2 provided with front steerable wheels 3 and rear traction wheels 4 for moving the chassis over the ground. The chassis is in the form of a gantry in order to be able to straddle a row of plants, such as grape-vines. In known manner, the chassis 2 carries a harvesting assembly 5 comprising a shaker assembly (not shown) and two elevator conveyors 6 (only one of which is schematically shown) for collecting the grapes that have been detached by the shaker assembly in order to convey them to a temporary storage tank 7 (in general, two tanks are provided on respective sides of the machine 1).The chassis further carries an engine 8 providing the rotational power necessary to drive the various active members of the harvester 1 and also for providing motive power to the wheels 3, 4 since the -machine 1 is of the self-propelled type.

To give the harvester operator a clear and unobstructed view down and forward, the grape harvester 1 is provided with an operator's station or platform 10 located at the forward portion of the harvester above the left steering wheel 3 or in other words transversely offset relative to the longitudinal centre plane of the harvester the operator's seat 11, the steering controls (such as steering column, brakes, etc.) and the main harvesting components controls. It will be understood that the specific location of the operator's station on the chassis 2 has relatively nothing to do with the scope of the invention to be described. To increase the comfort of the operator, an environmentally isolated cab 12 is provided which surrounds the operator's station 10 and includes an access door 13. Behind the cab 12, at a slightly elevated position relative to the cab floor 14, a servicing platform 16 is installed to enhance the accessibility towards the harvesting components located at the top of the harvester 1. To promote safety and ease of use of the servicing platform 16, a pair of hand rails 15 and intermediate steps 17 are provided. Access means 18, comprising a catwalk or platform 20 and a ladder 22, are attached to the left hand side of the harvester 1 at a suitable location to enable an operator to reach as well the entrance door 13 of the cab 12 as the servicing platform 16, on condition that the access means 18 are placed in an operative position.

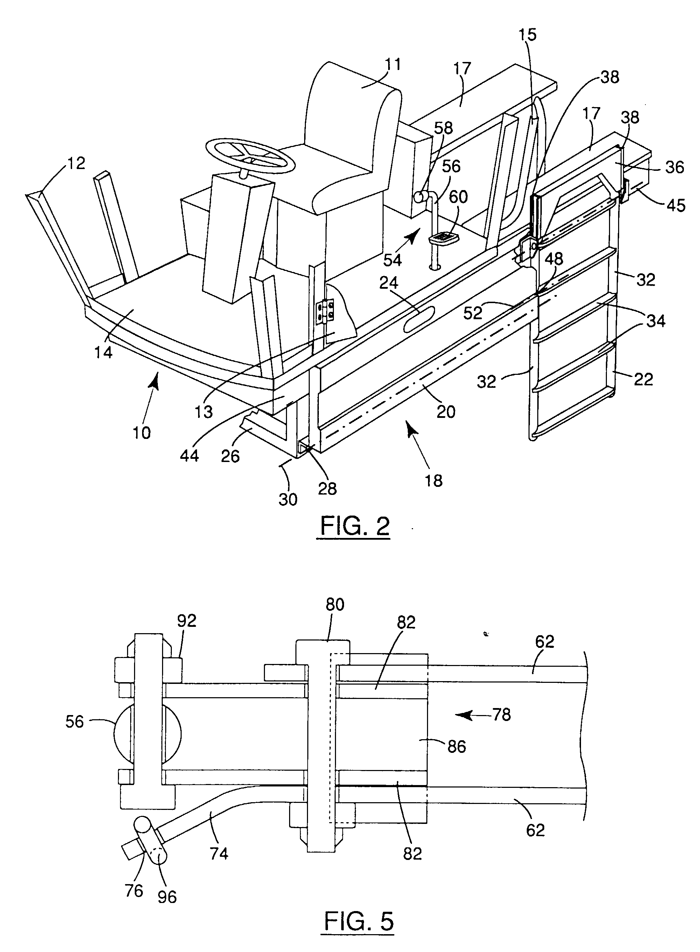

As shown in Figure 1 and with specific reference to Figure 2, the access means 18 are represented in the inoperative, transport position with the platform 18 in an upright position and the ladder 22 being placed in the vertical plane defined by the platform 18. This vertical plane intersects the outer transverse edge of the left steering wheel 3 and therefore both the platform 20 and the ladder 22 do not protrude therebeyond, meaning that, in the inoperative position, the access means 18 do not increase the overall width of the harvester 1. In as much as the platform 20 stops short above the wheel 3 and the ladder 22 is located rearwardly thereof, the incidence of interference between the steering wheel 3 and the access means 18 is avoided. The platform 20 is provided with a handgrip 24 and is pivotally attached to chassis beams 26 by means of pivot members 28 provided at the bottom side of the platform 20 at the opposed longitudinal ends thereof and defining a first pivot axis 30. The ladder 22 includes a pair of opposite side rails 32 supporting a plurality of rigidly positioned steps 34. The top portion of the ladder 22 is reinforced by a member 36 carrying a pair of U-shaped sliding blocks 38 serving to slidably connect the ladder 22 to the chassis 2. Preferable, the sliding blocks are made of a synthetic material such as polyamide for example to reduce the frictional forces when moving the ladder from the transport position to an operative position and vice versa. Part of the platform 20 has been curtailed to more clearly show the connection of the ladder 20 to the chassis 2.

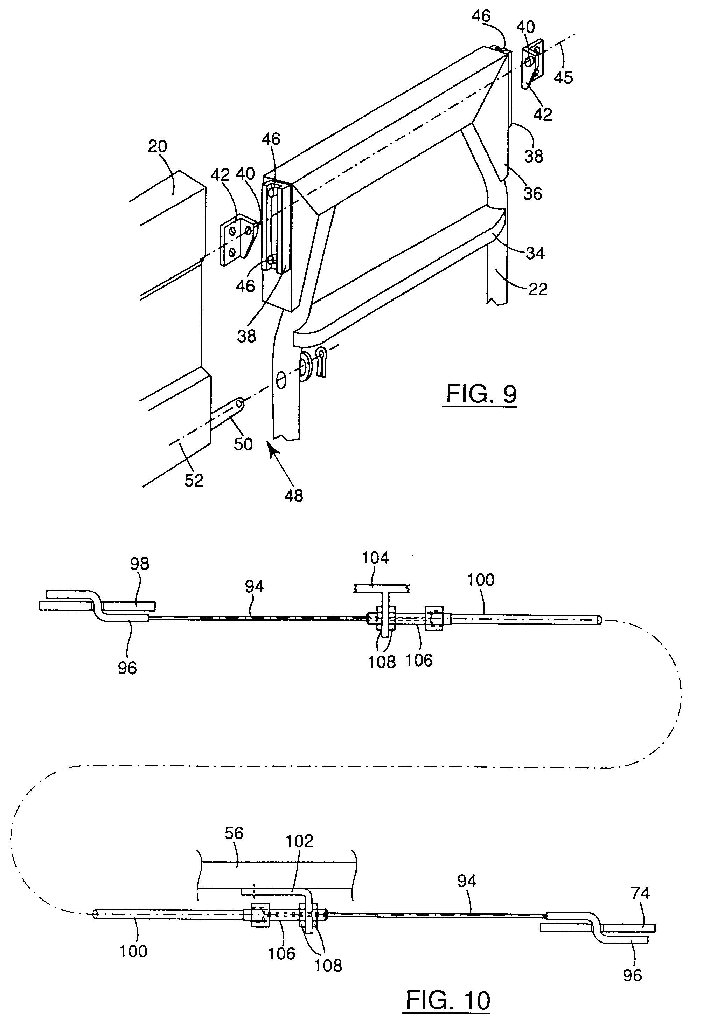

As best seen in the detailed, partially exploded view of Figure 9, each sliding block 38 receives a pin 40 protruding from a bracket 42 which is fixedly attached to a longitudinally directed beam 44 of the chassis 2. The pins 40 are aligned with each other and define a second pivot axis 45. Abutment screws 46 are inserted in the U-shaped groove of each sliding block 38 at the opposed ends thereof to restrict the motion of each pin 40 relative to its associated sliding block 38. In the inoperative position of the ladder 22, the pins 40 nearly engage the screws 46 at the bottom end of the sliding blocks 38 whereby a portion of the ladder 20 extends upwardly above the axis 45 over a height somewhat less than the distance between two adjacent steps 34. The ladder 22 further comprises an articulated connection 48 with the platform 20 including a pivot pin 50, defining a third pivot axis 52, around which the ladder 22 can hinge relative to the platform 20. All three pivot axes 30, 45 and 52 have a parallel orientation relative to each other, as seen in Figure 2, and are substantially coplanar.

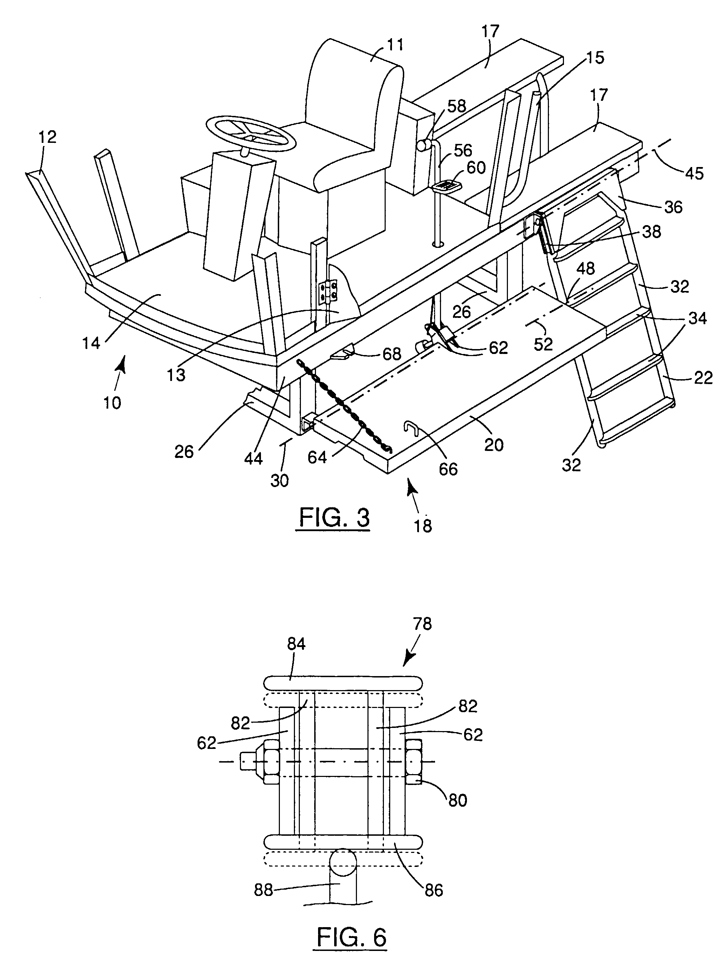

Referring to Figures 2 and 3, movement of the access means 18 is controlled by a handle mechanism generally indicated at 54 including a handle 56 with a grip 58 and a pedal 60; the handle being operatively connected to a pair of levers 62 fixedly attached to the bottom side of the platform 20. Actuation of the handle mechanism 54 effects movement of the access means 18 from the inoperative to the operative position and vice versa in a manner to be discussed in detail hereafter. The handle 56 is located at the rear left side of the operator's seat 11 at a location suitable for the operator to reach it.

In the operative position of the access means 18, as depicted in Figure 3, the platform 20 takes up a horizontal position whereas the lower side of the ladder 22 is positioned transversely outwardly relative to the upper side thereof. In swivelling the platform 20 from the vertical to the horizontal orientation around the axis 30, the ladder 22 in fact is subjected to a composed movement being on the one hand a lowering motion and on the other hand a swivelling motion. These motions are due to the articulated connection 48 between the ladder 22 and the platform 20 since indeed this connection 48 is rotated around axis 30 over an arc of 90° when opening the platform 20 resulting in the connection 48 not only being lowered over the distance inbetween the two axes 52 and 30 but also being shifted transversely outwardly over the same distance. The three axes 30, 45 and 52 thus no longer are coplanar but define a right-angled triangle inbetween. Consequently, in bringing the ladder 22 to the operative position, the sliding blocks 38 slide downwardly over the pins 40 and simultaneously change their angular position relative thereto. The length of the sliding blocks 38 and the specific location of the upper abutment screws 46 is chosen such that the pins 40 engage these screws 46 when the platform 20 reaches its horizontal, operative position, thereby preventing the platform 20 from exceeding this position. It will be appreciated from the foregoing that, to this end, the distance between the abutment screws 46 approximately has to correspond to the distance between the two axes 30 and 52. To further improve the stability of the platform 20 in the horizontal position, a retention chain or cable 64 is provided at the side of the platform 20 opposite to the end connected to the ladder 22. This chain or cable 64 is folded up behind the platform 20 when in the inoperative position and is extended to a straight position when the platform 20 is opened. A hook 66 is rigidly attached to the platform 66 for engaging a locking mechanism 68 operative to lock the platform 20 and hence the ladder 22 in the inoperative position. The locking mechanism 68 is of the type having two extreme rest positions, namely a closed position in which a retainer member (not shown) needs to be withdrawn to release the hook 66 and an open position in which the retainer member may be closed by actuation of the hook 66 thereagainst.

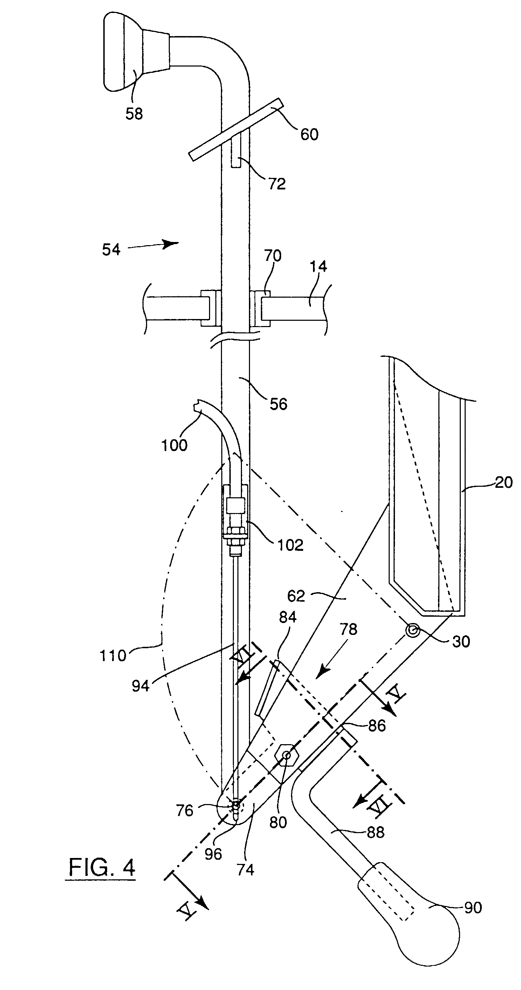

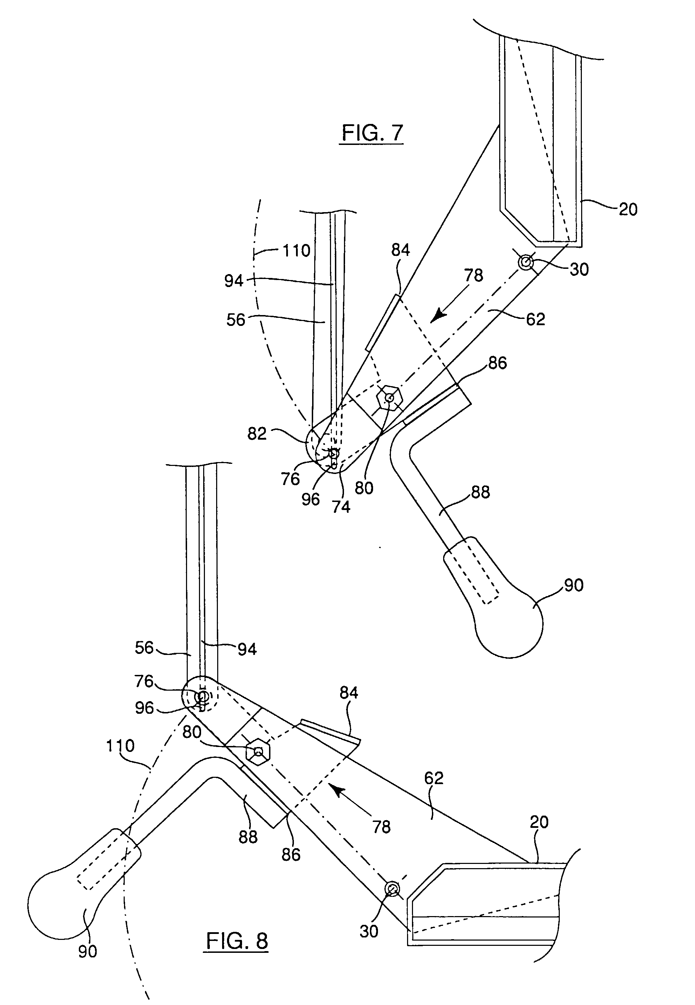

The handle mechanism 54 is shown in more details in Figures 4 to 8 and 10. The handle 56 is led through a guide member 70 inserted in an aperture provided in the cab floor 14. Some play inbetween the handle 56 and the member 70 is admitted to allow restricted swivelling movement of the handle 56 for a reason to be explained further. The grip 58 is secured to a hooked top portion of the handle 56 and the pedal 60 is supported by a reinforcement 72 welded to the handle 56 above the cab floor 14. Referring more specifically to Figures 4 to 6, the two levers 62 are rigidly connected to the platform 20, as already mentioned, and assume a parallel orientation with a given distance inbetween. One of the levers 62 comprises an angled extension 74 which deviates outwardly from the parallel orientation and in which a circular hole 76 is provided. Inbetween the distal end of the levers 62 relative to the platform 20, a bellcrank mechanism 78 is pivotally connected thereto by means of a bolt and nut arrangement 80. The bellcrank mechanism 78 includes a pair of parallel members 82 which are interconnected over a portion of their length by means of a top abutment member 84 and a similar bottom member 86. As best seen in Figure 6, the members 84 and 86 slightly protrude beyond the lateral outer sides of the levers 62 to limit the pivotal movement of bellcrank 78 around the bolt arrangement 80, which may be effected by manual actuation of a further handle 88 ending in a grip 90 and attached to the bottom member 86.

The free end of the bellcrank 78 is pivotally connected to the lower end of the handle 56 through the intermediary of a further bolt and nut arrangement 92 whereby any movement of the bellcrank 78 is transmitted to the handle 56. With specific reference to Figures 4 and 9, a cable 94 is shown ending on both sides in an angled attachment member 96 for bayonet-like connection to respectively the extension 74 of one of the levers 62 by means of the hole 76 and a component 98 of the locking mechanism 68. A major portion of the cable 94 is housed in a sheath 100 which on both sides is adjustably connected respectively to a support 102 rigidly attached to the handle 56 and to a fixed support 104 of the chassis 2. The adjustable connections comprise a screw 106 and fixation nuts 108 to vary the length of the sheath 100 and consequently vary the exerted tension on the cable 94. In as much as cable-sheath arrangements of the above kind are well known in the art, no further description is deemed necessary.

To move the access means 18 from the transport to the operative position from a location standing on the ground, the operator pushes the handle 88 away from him towards the longitudinal centre plane of the harvester 1. By this token, several actions are triggered. First of all, in as much as the top abutment member 84 of the bellcrank mechanism 78 is spaced vertically from the top edges of the levers 62 (as best seen in full line position in Figure 6), the bellcrank mechanism 78 is initially pivoted around bolt 80 in the clockwise direction as seen in Figure 4 until member 84 abuts the levers 62 (phantom line position of Figure 6 and the position as shown in Figure 7). Simultaneously, due to the pivotal connection 92, the handle 56 is urged upwardly over a small distance whereby the associated end of the sheath 100 is forced to follow the same displacement resulting from its fixed connection 102 to the handle 56. However, considering on the one hand that the opposite end of the sheath 100 is immovably connected to the fixed support 104 and on the other hand that one end of the cable 94 is attached to the extension 74 of one of the levers 62, which do not yet follow the displacement of the handle 56, it results that a pulling action is exerted on the cable 94 away from the locking mechanism 68 to which the cable 94 is operatively connected through the attachment member 96 hooked in the component 98. In other words, the locking mechanism 68 is unlocked by the above initial movement of the bellcrank 78 without any movement of the platform 20 and the ladder 22 being induced. In this respect, the bellcrank 78 can be considered as a lost motion control.

Because after the initial movement of the bellcrank 78, the abutment member 84 does not permit any further pivotal movement of said bellcrank 78 relative to the levers 62 in the given direction, any further actuation of the handle 88 by the operator causes the levers 62 to pivot upwardly around axis 30 and hence the platform 20 is pivoted downwardly around the same axis. The operator may assist in this movement by holding the handgrip 24 or the top edge of the platform 20. During this pivotal movement, the connection between the handle 56 and the bellcrank mechanism 78 is pivoted over an arc 110 of 90° until it reaches a position as shown in Figure 8 wherein the platform 20 is oriented horizontally. By releasing the handle 88, the bellcrank mechanism 78 returns to its initial rest position relative to the levers 62 as a result of the weight of the handle 56 pivoting the bellcrank 78 in the counterclockwise direction until the bottom abutment member 86 engages the lower edges of the levers 62. Since the lower end of the handle 56 is moved in an arcuate manner and an intermediate portion of the handle 56 is guided in the member 70, some swivelling movement of the handle 56 is experienced, requiring some play in the member 70, as already mentioned.

As described above, when opening the platform 20, the ladder 22 is lowered and simultaneously is positioned under an angle relative to the vertical longitudinal plane so as to increase the comfort of the operator to mount it. It will be appreciated from the foregoing that the angle of the ladder 22 in the operative position depends a.o. on the distance between the axes 52 and 30 and is only a matter of construction.

To close the access means 18 from the same position on the ground, the operator either may exert a pulling action on the handle 88 or preferably may push the platform 20 upwardly until the hook 66 snaps into the locking mechanism 68. Evidently, the ladder 22 follows the movement of the platform 20 and is returned to a vertical, upward position in which the clearance to the ground is increased when compared to the operative, access providing position.

To open the access means 18 from a position in the cab 12, the operator has to pull the handle 56 in a vertical, upward direction. Resulting from the fact that both handles 56 and 88 are operatively connected to the bellcrank 78, the sequential movements of the access means 18 are identical whether opened from the ground or from the cab 12. Thus, an initial upward movement of the handle 56 causes the bellcrank 78 to pivot slightly around bolt 80 whereby the hook 66 is unlocked from the locking mechanism 68. Thereafter, a further upward movement of the handle 56 pivots the levers 62 around axis 30 forcing the platform 20 to turn over to the horizontal, operative position.

For returning the access means 18 to the transport position from within the cab 12, the operator actuates the foot pedal 60 in the downward direction, rotating the levers 62 through arc 110 in the counterclockwise direction as seen in Figure 8 until the platform 20 as well as the ladder 22 are returned to their vertical, inoperative position.

Since the access means 18 provides access to both the cab 12 and the servicing platform 16, the operator may use said means 18 in different ways. Starting from the ground, the most common manoeuvre will be to place the access means 18 in the operative position by pushing the handle 88, mount the ladder 22, step on the platform 20, enter the cab 12 with the left foot first and close the access means 18 by pushing on the foot pedal 60 with the right foot. The reverse operation contains the steps of pulling the handle 56 with the left hand, stepping on the platform 20, descending the ladder 22 and closing the access means 18 by pushing the platform 20 upwardly. Starting from the cab 12, the operator also may open the access means 18, go to the servicing platform 16 by intermediary of the platform 20, return to the cab 12 again by using the platform 20 or eventually descend directly from the harvester 1 by means of the ladder 22. The servicing platform 16 also may be reached directly from the ground by using only the ladder 22. In fact, it will be appreciated that any combination of access inbetween the cab 12, the servicing platform 16 and the ground are possible.

Although the present invention has been described in relation to a grape harvester, it is evident that it is also applicable to any other agricultural harvester e.g. a combine harvester or a forage harvester, having an operator's station at an elevated position.

In an alternative arrangement (not shown), the sheath 100 may be fixedly attached at both sides to a chassis support whereas one end of the cable 94 could be connected to a portion of the bellcrank 78 inbetween the bolt 80 and the platform 20. By an initial movement of the bellcrank 78, a direct pull on the cable 94 would be effected thereby releasing the locking mechanism 68. Thus, instead of using the sheath 100 as an intermediary to open the locking mechanism 68, the cable 94 directly would take care thereof.

Other kinds of bellcrank mechanisms may be employed, provided that they comprise a lost motion device enabling the locking mechanism 68 to be unlocked before any motion is induced to the platform 20. The locking mechanism 68 also may be associated with the ladder 22 instead of with the platform 20.

## Claims

1. A vehicle (1) comprising :
- a chassis (2) supported by a plurality of ground engaging wheels (3, 4) for movement across a field;
- an elevated operator's station (10) positioned on the chassis (2); and
- access means (18) for gaining access to the operator's station (10);
said access means (18) being moveable between an operative, access gaining position and an inoperative, transport position; and
said access means (18) comprising ladder means (22) and platform means (20) operatively associated with each other in a manner such that said ladder means (22) and said platform means (20) move in unison when moving the access means (18) from the inoperative position to the operative position and vice versa,
characterized in that said ladder means (22) is connected to said platform means (20) by an articulated connection (48) permitting movement of said ladder means (22) relative to said platform means (20) when moving said access means (18) from said inoperative position to said operative position and vice versa.

2. A vehicle according to claim 1 characterized in that, in the inoperative position, the platform means (20) and the ladder means (22) are coplanar and extend generally vertically whereas, in the operative position, the platform means (20) is oriented horizontally and the ladder means (22) is inclined relative to the vertical.

3. A vehicle according to claim 1 or 2 characterized in that :
- the platform means (20) and the ladder means (22) are pivotally attached to the chassis (2) for pivotal movement around respective first and second pivot axes (30, 45); and
- the articulated connection is for movement around a third pivot axis (52).

4. A vehicle according to claim 3 characterized in that:
- the three respective pivot axes (30, 45 and 52) extend parallel to each other and are generally coplanar when the access means (18) are placed in the inoperative position with the third pivot axis (52) being located intermediate the first and second axes (30, 45); and
- when moving the access means (18) towards the operative position, the third pivot axis (52) is shifted outwardly from the plane defined by the first and second axes (30, 45) towards a position defining a generally horizontal plane with the first pivot axis (30).

5. A vehicle according to claim 4 characterized in that, in the operative position of the access means (18), the three pivot axes (30, 45 and 52) are oriented parallel to each other and define a substantially right-angled triangle inbetween.

6. A vehicle according to any of the claims 3 to 5 characterized in that the ladder means (22) comprises a pair of sliding blocks (38) each operatively associated with a support means (40) fixedly connected to the chassis (2) and comprising a U-shaped groove for slidably receiving a guide pin (40) of the support means (40); the guide pins (40) being aligned with respect to each other and defining said second pivot axis (45).

7. A vehicle according to claim 6 characterized in that abutment means (46) are provided at least at the upper end of the sliding blocks (38) for limiting the sliding movement of said blocks (38) relative to the guide pins (40) in a manner such that the guide pins (40) engage said abutment means (46) when the platform means (20) is oriented horizontally.

8. A vehicle according to claim 7 characterized in that the sliding blocks (38) are attached to the ladder means (22) at the top portion thereof whereas the pivotal connection between the platform means (20) and the ladder means (22) is located at a position therebeneath; the arrangement being such that during movement of the access means (18) from the inoperative position to the operative position the ladder means (22) is subjected to a composed movement being on the one hand a lowering over a distance equal to the perpendicular distance between the first and third pivot axes (30, 52) and on the other hand a lateral shifting of the lower end of the ladder means (22) in a direction away from the longitudinal centre plane of the vehicle (1).

9. A vehicle according to any of the preceding claims characterized in that retention means (64) are operatively associated with the platform means (20) for limiting the movement thereof towards the operative position.

10. A vehicle according to any of the preceding claims characterised in that a locking mechanism (66, 68) is operatively associated with the access means (18) for maintaining said means (18) in the inoperative position.

11. A vehicle according to any of the preceding claims characterized in that a handle mechanism (54) is operatively connected to the access means (18) in a manner to be operated from distinct locations, being from a position on the ground or on the operator's station (10), whereby movement of the handle mechanism (54) in one direction effects movement of the access means (18) towards the operative position and movement of the handle mechanism (54) in the opposite direction effects movement of the access means (18) towards the inoperative position.

12. A vehicle according to claim 11 when appended to claim 10 characterized in that the handle mechanism (54) comprises a lost motion mechanism (78) connected through cable means (94, 100) with the locking mechanism (66, 68) enabling to unlock the locking mechanism (66, 68) by an initial movement of the handle mechanism (54) without inducing movement to the platform means (20) or the ladder means (22).

13. A vehicle according to claim 12 characterized in that the lost motion mechanism (78) comprises a bellcrank (78) rotatably supported by a pair of levers (62) fixedly connected to the platform means (20) and including abutment members (84, 86) allowing limited pivotal movement of the bellcrank (78) relative to the levers (62).

14. A vehicle according to any of the claims 11 to 13 characterized in that the handle mechanism (54) comprises a foot pedal (60) for actuation from a location on the operator's station (10) to move the access means (18) from the operative position to the inoperative position.

15. A vehicle according to claim 12 to 14 characterized in that the cable means (94, 100) comprises :
- a cable (94) connected respectively to the locking mechanism (66, 68) and to one of said pair of levers (62);
- a sheath (100) partially housing the cable (94) and connected respectively to a fixed support (104) proximate to the locking mechanism (66, 68) and to the handle mechanism (54) proximate to said pair of levers (62); the arrangement being such that, upon initial actuation of the bellcrank (78), the end of the sheath (100) connected to the handle mechanism (54) is moved away from the connection of the cable (94) to one of said pair of levers (62) whereby the cable (94) is actuated to unlock the locking mechanism (66, 68).

16. A method of controlling the position of access means (18) for an elevated operator's station (10) of a vehicle (1); said access means (18) being moveable between an inoperative and an operative position, said access means comprising platform means (20), ladder means (22) articulatedly connected to said platform means (20) and handle means (54), operatively associated with said access means (18), said method comprising the steps of :
- actuating said handle means (54) in one direction for simultaneously moving the platform means (20) and the ladder means (22) towards an operative position; and
- actuating said handle means (54) in the opposite direction for simultaneously moving the platform means (20) and the ladder means (22) towards an inoperative position.

17. A method according to claim 16, characterized in that said moving steps comprise:
- pivoting the platform means (20) between a vertical, inoperative position and a horizontal, operative position; and
- simultaneously moving the ladder means (22) between a raised, vertical position and a lowered, inclined position.

18. A method according to claim 16 or 17 characterized in that it further comprises the steps of :
- manually actuating the handle means (54) to move the access means (18) towards the operative position; and
- actuating the handle means (54) by foot pressure to move the access means (18) towards the inoperative position.

19. A method of gaining access to an elevated operator's station (10) of a vehicle (1) having access means (18) including ladder means (22) and platform means (20), moveable between inoperative and operative positions,
characterized in that the method comprises the steps of :
- manually actuating handle means (54) in one direction from a position on the ground to move the ladder means (22) and the platform means (20) towards the operative position;
- mounting the ladder means (22);
- using the platform means (18) as an intermediate support;
- stepping on the operator's platform; and
- actuating the handle means (54) in the opposite direction from the position on the operator's station (10) to move the ladder means (22) and the platform means (20) towards the inoperative position.

20. A method according to claim 19 characterized in that :
- the stepping step is effected by one foot; and
- the actuating step from the position on the operator's station (10) is effected by the other foot.

## Patentansprüche

1. Fahrzeug 1 mit:
- einem Fahrgestell (2), das von einer Anzahl von mit dem Boden in Eingriff kommenden Rädern (3, 4) für eine Bewegung über ein Feld abgestützt ist,
- einer erhöhten Fahrerstation (10), die auf dem Fahrgestell (2) angeordnet ist, und
- Zugangsvorrichtungen (18), um einen Zugang an die Fahrerstation (10) zu erreichen,
wobei die Zugangsvorrichtungen (18) zwischen einer Betriebsstellung, in der ein Zugang erreicht wird, und einer Ruhe- und Transportstellung beweglich sind, und
wobei die Zugangsvorrichtungen (18) eine Leitereinrichtung (22) und eine Plattformeinrichtung (20) umfassen, die betriebsmäßig einander derart zugeordnet sind, daß die Leitereinrichtung (22) und die Plattformeinrichtung (20) sich gemeinsam bewegen, wenn die Zugangsvorrichtungen (18) von der Ruhestellung in die Betriebsstellung bewegt werden, und umgekehrt,
dadurch gekennzeichnet, daß die Leitereinrichtung (22) mit der Plattformeinrichtung (20) über eine Gelenkverbindung (48) verbunden ist, die eine Bewegung der Leitereinrichtung (22) gegenüber der Plattformeinrichtung (20) ermöglicht, wenn die Zugangsvorrichtungen (18) von ihrer Ruhestellung in die Betriebsstellung und umgekehrt bewegt werden.

2. Fahrzeug nach Anspruch 1, dadurch gekennzeichnet, daß in der Ruhestellung die Plattformeinrichtung (20) und die Leitereinrichtung (22) koplanar sind und sich allgemein vertikal erstrecken, während in der Betriebsstellung die Plattformeinrichtung (20) horizontal ausgerichtet ist und die Leitereinrichtung (22) gegenüber der vertikalen geneigt ist.

3. Fahrzeug nach Anspruch 1 oder 2, dadurch gekennzeichnet, daß:
- die Plattformeinrichtung (20) und die Leitereinrichtung (22) schwenkbar an dem Fahrgestell (2) für eine Schwenkbewegung um jeweilige erste und zweite Achsen (30, 45) angebracht sind, und daß die Gelenkverbindung für eine Bewegung um eine dritte Schwenkachse (52) vorgesehen ist.

4. Fahrzeug nach Anspruch 3, dadurch gekennzeichnet, daß:
- die sich drei jeweiligen Schwenkachsen (30, 45) und (52) parallel zueinander erstrecken und allgemein koplanar sind, wenn die Zugangsvorrichtungen (18) in die Ruhestellung gebracht wurden, wobei die dritte Schwenkachse (52) zwischen den ersten und zweiten Achsen (30, 45) liegt, und
- bei einer Bewegung der Zugangsvorrichtungen (18) in Richtung auf die Betriebsstellung die dritte Schwenkachse (52) nach außen aus der durch die ersten und zweiten Achsen (30, 45) gebildeten Ebene heraus in Richtung auf eine Position verschoben wird, die eine allgemein horizontale Ebene mit der ersten Schwenkachse (30) definiert.

5. Fahrzeug nach Anspruch 4, dadurch gekennzeichnet, daß in der Betriebsstellung der Zugangsvorrichtungen (18) die drei Schwenkachsen (30, 45) und (52) parallel zueinander ausgerichtet sind und zwischen sich ein allgemein rechtwinkliges Dreieck bilden.

6. Fahrzeug nach einem der Ansprüche 3 bis 5, dadurch gekennzeichnet, daß die Leitereinrichtung (22) zwei Gleitblöcke (38) umfaßt, die jeweils betriebsmäßig einer fest mit dem Fahrgestell (2) verbundenen Halterungseinrichtung (40) zugeordnet sind und eine U-förmige Nut zur gleitenden Aufnahme eines Führungsbolzens (40) der Halterungseinrichtung (40) aufweisen, wobei die Halterungsbolzen (40) miteinander ausgerichtet sind und die zweite Schwenkachse (45) bilden.

7. Fahrzeug nach Anspruch 6, dadurch gekennzeichnet, daß Anschlageinrichtungen (46) zumindest am oberen Ende der Gleitblöcke 38 vorgesehen sind, um die Gleitbewegung der Blöcke (38) gegenüber den Führungsbolzen (40) derart zu begrenzen, daß die Führungsbolzen (40) mit den Anschlageinrichtungen (46) in Eingriff kommen, wenn die Plattformeinrichtung (20) horizontal ausgerichtet ist.

8. Fahrzeug nach Anspruch 7, dadurch gekennzeichnet, daß die Gleitblöcke (38) an der Leitereinrichtung (22) an deren oberen Abschnitt befestigt sind, während die Schwenkverbindung zwischen der Plattformeinrichtung (20) und der Leitereinrichtung (22) an einer darunterliegenden Position angeordnet ist, wobei die Anordnung derart ist, daß während einer Bewegung der Zugangseinrichtungen (18) von der Ruhestellung in die Betriebsstellung die Leitereinrichtung (22) einer zusammengesetzten Bewegung unterworfen wird, die einerseits ein Absenken über eine Strecke gleich dem senkrechten Abstand zwischen den ersten und dritten Schwenkachsen (30, 52) und andererseits eine seitliche Verschiebung des unteren Endes der Leitereinrichtung (22) in einer Richtung von der längsgerichteten Mittelebene des Fahrzeuges (1) fort ist.

9. Fahrzeug nach einem der vorhergehenden Ansprüche, dadurch gekennzeichnet, daß Rückhalteeinrichtungen (64) betriebsmäßig der Plattformeinrichtung (20) zugeordnet sind, um deren Bewegung in Richtung auf die Betriebsstellung zu begrenzen.

10. Fahrzeug nach einem der vorhergehenden Ansprüche, dadurch gekennzeichnet, daß ein Verriegelungsmechanismus (66, 68) betriebsmäßig den Zugangsvorrichtungen (18) zugeordnet ist, um die Zugangsvorrichtungen (18) in der Ruhestellung zu halten.

11. Fahrzeug nach einem der vorhergehenden Ansprüche, dadurch gekennzeichnet, daß ein Handgriffmechanismus (54) betriebsmäßig mit den Zugangsvorrichtungen (18) in einer derartigen Weise verbunden ist, daß er von unterschiedlichen Stellen aus betätigbar ist, die durch eine Position auf dem Boden oder auf der Fahrerstation (10) gebildet sind, wobei eine Bewegung des Handgriffmechanismus (54) in einer Richtung eine Bewegung der Zugangsvorrichtungen (18) in Richtung auf die Betriebsstellung bewirkt, während eine Bewegung des Handgriffmechanismus (54) in der entgegengesetzten Richtung eine Bewegung der Zugangsvorrichtungen (18) in Richtung auf die Ruhestellung bewirkt.

12. Fahrzeug nach Anspruch 11 unter Rückbeziehung auf Anspruch 10, dadurch gekennzeichnet, daß der Handgriffmechanismus (54) einen Totgangmechanismus (78) umfaßt, der über Seileinrichtungen (54, 100) mit dem Verriegelungsmechanismus (66, 68) verbunden ist und eine Entriegelung des Verriegelungsmechanismus (66, 68) durch eine Anfangsbewegung des Handgriffmechanismus (54) ermöglicht, ohne daß eine Bewegung der Plattformeinrichtung (20) oder der Leitereinrichtung (22) hervorgerufen wird.

13. Fahrzeug nach Anspruch 12, dadurch gekennzeichnet, daß der Totgangmechanismus (78) einen Winkelhebel (78) umfaßt, der drehbar durch zwei Hebel (62) gehaltert ist, die fest mit der Plattformeinrichtung (20) verbunden sind und Anschlagteile (84, 86) einschließen, die eine begrenzte Schwenkbewegung des Winkelhebels (78) gegenüber den Hebeln (62) ermöglichen.

14. Fahrzeug nach einem der Ansprüche 11 bis 13, dadurch gekennzeichnet, daß der Handgriffmechanismus (54) ein Fußpedal (60) zur Betätigung von einer Position auf der Fahrerstation (10) aus zur Bewegung der Zugangsvorrichtungen (18) von der Betriebsstellung auf die Ruhestellung umfaßt.

15. Fahrzeug nach Anspruch 12 bis 14, dadurch gekennzeichnet, daß die Seileinrichtungen (54, 100) folgendes umfassen:
- ein Seil (94), das jeweils mit dem Verriegelungsmechanismus (66, 68) bzw. einem des Paares von Hebeln (62) verbunden ist,
- eine Hülle (100), die das Seil (94) teilweise umgibt und jeweils mit einer festen Halterung (104) in der Nähe des Verriegelungsmechanismus (66, 68) bzw. mit dem Handgriffmechanismus (54) in der Nähe des Paares von Hebeln (62) verbunden ist, wobei die Anordnung derart ist, daß bei einer anfänglichen Betätigung des Winkelhebels (78) das mit dem Handgriffmechanismus (54) verbundene Ende der Hülle (100) von der Verbindung des Seils (94) mit einem des Paares von Hebeln (62) fortbewegt wird, wodurch das Seil (94) zum Entriegeln des Verriegelungsmechanismus (66, 68) betätigt wird.

16. Verfahren zur Steuerung der Position von Zugangsvorrichtungen (18) für eine erhöhte Fahrerstation (10) eines Fahrzeuges (1), wobei die Zugangsvorrichtungen (18) zwischen einer Ruhestellung und einer Betriebsstellung beweglich sind, wobei die Zugangsvorrichtungen eine Plattformeinrichtung (20), eine Leitereinrichtung (22), die gelenkig mit der Plattformeinrichtung (20) verbunden ist, und Handgriffeinrichtungen (54) umfassen, die betriebsmäßig den Zugangsvorrichtungen (18) zugeordnet sind, wobei das Verfahren die folgenden Schritte umfaßt:
- Betätigen der Handgriffeinrichtungen (54) in einer Richtung zur gleichzeitigen Bewegung der Plattformeinrichtung (20) und der Leitereinrichtung (22) in Richtung auf eine Betriebsstellung, und
- Betätigen der Handgriffeinrichtungen (54) in der entgegengesetzten Richtung zur gleichzeitigen Bewegung der Plattformeinrichtung (20) und der Leitereinrichtung (22) in Richtung auf eine Ruhestellung.

17. Verfahren nach Anspruch 16, dadurch gekennzeichnet, daß die Bewegungsschritte folgendes umfassen:
- Verschwenken der Plattformeinrichtung (20) zwischen einer vertikalen Ruhestellung und einer horizontalen Betriebsstellung, und
- gleichzeitiges Bewegen der Leitereinrichtung (22) zwischen einer angehobenen vertikalen Position und einer abgesenkten geneigten Position.

18. Verfahren nach Anspruch 16 oder 17, dadurch gekennzeichnet, daß es weiterhin die folgenden Schritte umfaßt:
- manuelles Betätigen der Handgriffeinrichtungen (54) zur Bewegung der Zugangsvorrichtungen (18) in Richtung auf die Betriebsstellung, und
- Betätigen der Handgriffeinrichtungen (54) durch Fußdruck zum Bewegen der Zugangsvorrichtungen (18) in die Ruhestellung.

19. Verfahren zum Erreichen eines Zuganges an eine erhöhte Förderstation (10) eines Fahrzeuges (1), das Zugangsvorrichtungen (18) unter Einschluß einer Leitereinrichtung (22) und einer Plattformeinrichtung (22) umfaßt, die zwischen Ruhestellungen und Betriebsstellungen beweglich sind,
dadurch gekennzeichnet, daß das Verfahren die folgenden Schritte umfaßt:
- manuelles Betätigen von Handgriffeinrichtungen (54) in einer Richtung von einer Position auf dem Boden aus zum Bewegen der Leitereinrichtung (22) und der Plattformeinrichtung (20) in Richtung auf die Betriebsstellung,
- Heraufsteigen auf der Leitereinrichtung (22),
- Verwenden der Plattformeinrichtung (18) als Zwischenabstützung,
- Betreten der Fahrerplattform, und
- Betätigen der Handgriffeinrichtungen (54) in der entgegengesetzten Richtung von der Position auf der Förderstation (10) aus zum Bewegen der Leitereinrichtung (22) und der Plattformeinrichtung (20) in Richtung auf die Ruhestellung.

20. Verfahren nach Anspruch 19, dadurch gekennzeichnet, daß:
- der Schritt des Betretens mit einem Fuß ausgeführt wird, und
- der Betätigungsschritt von der Position auf der Fahrerstation (10) aus mit dem anderen Fuß bewirkt wird.

## Revendications

1. Véhicule (1) comprenant:
- un châssis supporté par une pluralité de roues (3, 4) en contact avec le sol pour assurer le mouvement dans un champ;
- un poste surélevé de pilotage (10) positionné sur le châssis (2) ; et
- un moyen d'accès (18) destiné à atteindre le poste de pilotage (10);
ledit moyen d'accès (18) pouvant se déplacer entre une position fonctionnelle donnant accès, et une position non fonctionnelle de transport; et
ledit moyen d'accès (18) comprenant un moyen d'échelle (22) et un moyen de plate-forme (20) associés fonctionnellement entre eux de telle sorte que ledit moyen d'échelle (22) et ledit moyen de plate-forme (20) se meuvent de concert en déplaçant le moyen d'accès (18) de la position non fonctionnelle vers la position fonctionnelle, et vice versa,
caractérisé en ce que ledit moyen d'échelle (22) est relié audit moyen de plate-forme (20) par une liaison articulée (48) permettant le mouvement dudit moyen d'échelle par rapport à ladite plate-forme (20) en déplaçant ledit moyen d'accès (18) de ladite position non fonctionnelle à ladite position fonctionnelle, et vice versa.

2. Véhicule selon la revendication 1, caractérisé en ce que, en position non fonctionnelle, le moyen de plate-forme (20) et le moyen d'échelle (22) sont coplanaires et s'étendent généralement à la verticale, tandis qu'en position fonctionnelle, le moyen de plate-forme (20) est orienté horizontalement et le moyen d'échelle (22) est incliné par rapport à la verticale.

3. Véhicule selon la revendication 1 ou 2, caractérisé en ce que :
- le moyen de plate-forme (20) et le moyen d'échelle (22) sont reliés avec pivotement au châssis (2) afin de pivoter respectivement autour des premier et second axes de pivotement (30, 45); et
- la liaison articulée est destinée au mouvement autour d'un troisième axe de pivotement (52).

4. Véhicule selon la revendication 3, caractérisé en ce que: - les trois axes respectifs de pivotement (30, 45 and 52) s'étendent parallèlement entre eux et sont généralement coplanaires lorsque le moyen d'accès (18) est placé dans la position non fonctionnelle, avec le troisième axe de pivotement (52) situé entre les premier et second axes de pivotement (30, 45); et
- lors du mouvement du moyen d'accès (18) vers la position fonctionnelle, le troisième axe de pivotement (52) est déplacé vers l'extérieur du plan défini par les premier et second axes (30, 45) en direction d'une position définissant un plan horizontal avec le premier axe de pivotement (30).

5. Véhicule selon la revendication 4, caractérisé en ce que, dans la position fonctionnelle du moyen d'accès (18), les trois axes de pivotement (30, 45 and 52) sont orientés parallèlement entre eux et définissent substantiellement un triangle rectangle entre eux.

6. Véhicule selon l'une quelconque des revendications 3 à 5, caractérisé en ce que le moyen d'échelle (22) comprend une paire de blocs coulissants (38) associés chacun fonctionnellement avec un moyen de support (40) relié rigidement au châssis (2), et comprenant une rainure en forme de U afin de recueillir avec coulissement une broche de guidage (40) du moyen de support (40); les broches de guidage (40) étant alignées entre elles et définissant ledit second axe de pivotement (45).

7. Véhicule selon la revendication 6, caractérisé en ce que des moyens de butée (46) sont prévus au moins à l'extrémité supérieure des blocs coulissants (38) afin de limiter le coulissement desdits blocs (38) par rapport aux broches de guidage (40) de manière telle que les broches de guidage (40) entrent en contact avec lesdits moyens de butée (46) lorsque le moyen de plate-forme (20) est orienté horizontalement.

8. Véhicule selon la revendication 7, caractérisé en ce que les blocs coulissants (38) sont fixés au moyen d'échelle (22) en leur partie supérieure tandis que la liaison pivotante entre le moyen de plate-forme (20) et le moyen d'échelle (22) est situé à une position inférieure à eux; l'arrangement étant tel que durant le mouvement du moyen d'accès (18) de la position non fonctionnelle vers la position fonctionnelle, le moyen d'échelle (22) est soumis à un mouvement composé consistant d'une part à un abaissement sur une distance égale à la distance perpendiculaire entre les premier et troisième axes de pivotement (30, 52) et d'autre part à un déplacement latéral de l'extrémité inférieure du moyen d'échelle (22) dans un sens s'écartant du plan axial longitudinal du véhicule (1).

9. Véhicule selon l'une quelconque des revendications précédentes, caractérisé en ce que des moyens de retenue (64) sont associés fonctionnellement avec le moyen de plate-forme (20) pour limiter leur mouvement vers la position fonctionnelle.

10. Véhicule selon l'une quelconque des revendications précédentes, caractérisé en ce qu'un mécanisme de verrouillage (66, 68) est fonctionnellement associé avec le moyen d'accès (18) pour maintenir ledit moyen (18) dans la position non fonctionnelle.

11. Véhicule selon l'une quelconque des revendications précédentes, caractérisé en ce qu'un moyen de bras de commande (54) est relié fonctionnellement au moyen d'accès (18) de manière à être actionné depuis des endroits différents, à savoir depuis une position au sol ou sur le poste de pilotage (10), où le mouvement du mécanisme de bras de commande (54) dans un sens entraîne un mouvement du moyen d'accès (18) vers la position fonctionnelle et un mouvement du mécanisme de bras de commande (54) dans le sens inverse entraîne un mouvement du moyen d'accès (18) vers la position non fonctionnelle.

12. Véhicule selon la revendication 11 lorsqu'elle se rapporte à la revendication 10, caractérisé en ce que le mécanisme de bras de commande (54) comprend un mécanisme à mouvement perdu (78) relié par des moyens de câble (94, 100) avec le mécanisme de verrouillage (66, 68) pour permettre un déverrouillage du mécanisme de verrouillage (66, 68) à l'aide d'un mouvement initial du mécanisme de bras de commande (54) sans induire de mouvement du moyen de plate-forme (20) ou du moyen d'échelle (22).

13. Véhicule selon la revendication 12, caractérisé en ce que le mécanisme à mouvement perdu (78) comprend un levier coudé (78) soutenu avec rotation par une paire de leviers (62) reliés rigidement au moyen de plate-forme (20) et comprenant des segments de butée (84, 86) permettant de limiter le mouvement de pivotement du levier coudé (78) par rapport aux leviers (62).

14. Véhicule selon l'une quelconque des revendications 11 à 13, caractérisé en ce que le mécanisme de bras de commande (54) comprend une pédale (60) pour un actionnement depuis le poste de pilotage (10) afin de déplacer le moyen d'accès (18) de la position fonctionnelle vers la position non fonctionnelle.

15. Véhicule selon l'une quelconque des revendications 12 à 14, caractérisé en ce que les moyens de câble (94, 100) comprennent:
- un câble (94) relié respectivement au mécanisme de verrouillage (66, 68) et à un levier de ladite paire de leviers (62);
- une gaine (100) entourant partiellement le câble (94) et reliée respectivement à un support fixe (104) situé à proximité du mécanisme de verrouillage (66, 68) et au mécanisme de bras de commande (54) à proximité de ladite paire de leviers (62); l'arrangement étant tel que lors de l'actionnement initial du levier coudé (78), l'extrémité de la gaine (100) reliée au mécanisme de bras de commande (54) est écartée de la connexion du câble (94) à un levier de ladite paire de leviers (62) de sorte que le câble est actionné pour déverrouiller le mécanisme de verrouillage (66, 68).

16. Méthode de contrôle de la position d'un moyen d'accès (18) pour un poste surélevé de pilotage (10) d'un véhicule (1); ledit moyen d'accès (18) pouvant se déplacer entre une position non fonctionnelle et une position fonctionnelle, ledit moyen d'accès comprenant un moyen de plate-forme (20), un moyen d'échelle (22) relié avec articulation audit moyen de plate-forme (20) et un moyen de bras de commande (54) associé fonctionnellement audit moyen d'accès (18),
ladite méthode comprenant les étapes:
- d'actionnement dudit moyen de bras de commande (54) dans une direction afin de déplacer simultanément le moyen de plate-forme (20) et le moyen d'échelle (22) vers une position fonctionnelle; et
- d'actionnement dudit moyen de bras de commande (54) dans la direction opposée afin de déplacer simultanément le moyen de plate-forme (20) et le moyen d'échelle (22) vers une position non fonctionnelle.

17. Méthode selon la revendication 16, caractérisée en ce que lesdites étapes de mouvement comprennent:
- le pivotement de la plate-forme (20) entre une position verticale non fonctionnelle et une position horizontale fonctionnelle; et
- simultanément, le déplacement du moyen d'échelle (22) entre une position verticale surélevée et une position inclinée abaissée.

18. Méthode selon la revendication 16 ou 17, caractérisée en ce qu'elle comprend en outre les étapes:
- d'actionnement manuel du moyen de bras de commande (54) pour déplacer le moyen d'accès (18) vers la position fonctionnelle; et
- d'actionnement du moyen de bras de commande (54) par une pression du pied pour déplacer le moyen d'accès (18) vers la position non fonctionnelle.

19. Méthode pour avoir accès à un poste élevé de pilotage (10) d'un véhicule (1) possédant un moyen d'accès (18) comprenant un moyen d'échelle (22) et un moyen de plate-forme (20), pouvant se déplacer entre une position non fonctionnelle et une position fonctionnelle,
caractérisée en ce que la méthode comprend les étapes:
- d'actionnement manuel du moyen de bras de commande (54) dans un sens depuis une position au sol afin de déplacer le moyen d'échelle (22) et le moyen de plate-forme (20) vers la position fonctionnelle;
- de montée sur le moyen d'échelle (22);
- d'utilisation du moyen de plate-forme (20) en tant que support intermédiaire;
- de prise pied sur la plate-forme de pilotage; et
- d'actionnement du moyen de bras de commande (54) dans le sens opposé depuis la position sur le poste de pilotage (10) pour déplacer le moyen d'échelle (22) et le moyen de plate-forme vers la position non fonctionnelle.

20. Méthode selon la revendication 19, caractérisée en ce que :
- l'étape de prise pied est effectuée par un seul pied; et
- l'étape d'actionnement depuis la position sur la plate-forme de pilotage (10) est effectuée par l'autre pied.
